# FASCICULE DE BREVET EUROPEEN

(11) **EP 0 456 601 B1**
(45) Date de publication et mention de la délivrance du brevet: **27.03.1996**
(21) Numéro de dépôt: 91810287.2
(22) Date de dépôt: 17.04.1991
(51) Int. Cl.: G05B 19/18, G05B 19/23

(54) **Dispositif de commande pour axe numérique incrémentiel dans un centre d'usinage**
Vorrichtung zur Steuerung einer numerisch inkrementelen Achse in einem Werkzeugmaschinenzentrum
Command device for a numerical incremental axis in a machine tool centre

(30) Priorité: 24.04.1990 CH 1384/90
(43) Date de publication de la demande: 13.11.1991
(73) Titulaire: Tornos-Bechler SA Fabrique de Machines Moutier, CH-2740 Moutier (Kanton-Bern) (CH)
(72) Inventeur: Simonin, Jean-Claude, CH-2740 Moutier (CH)
(74) Mandataire: Fischer, Franz Josef

(56) Documents cités:
- DE-A- 3 220 628
- DE-A- 3 426 548
- DE-A- 3 743 717
- DE-C- 3 742 573
- US-A- 4 757 458

## Description

La présente invention a pour objet un dispositif de commande pour axe numérique incrémentiel dans un centre d'usinage.

Les dispositifs de commande numérique des centres d'usinage comportent en général dans leur programme une séquence de prise de référence qui se déroule lors de la mise en marche de la machine. Cette séquence consiste à amener, pour chaque axe, le chariot soumis à l'impulsion de cet axe dans une position de référence à partir de laquelle les déplacements à effectuer durant la séquence de travail seront comptés.

En général, la position de référence est déterminée sur un organe de mesure fixe. La position de l'équipage mobile est constamment détectée, aussi bien au cours de la séquence de prise de référence qu'au cours des séquences de travail par rapport à cet organe. Des règles fixes portant des repères de détection forment en général lesdits organes de mesure. Elles sont fixées le long de la course des équipages mobiles et comportent plusieurs repères de référence échelonnés, afin de permettre une adaptation aux conditions particulières de chaque machine. Il est donc nécessaire, au moment de la mise en service,d'"activer" celui des repères de référence que l'on désire utiliser.

Jusqu'à maintenant, on a utilisé, dans ce but, un capteur, en général un interrupteur à contact qui est placé au voisinage du repère que l'on désire activer. Durant la séquence de prise de référence que comporte le programme de la machine, l'équipage mobile est déplacé jusqu'au moment où l'interrupteur est actionné. A ce moment, le détecteur de référence est activé et, au moment où il détecte le prochain repère de référence, l'équipage mobile est dirigé sur cette référence et la position de zéro est mise en mémoire dans le dispositif de commande.

Ainsi, dans le brevet US-3 828 318, qui se rapporte à une machine-outil à laquelle est associé un système de commande numérique, est décrite (notamment dans le passage entre col. 5, ligne 57 et col. 6, ligne 27) une opération de prise de référence portant sur deux axes X et Y en vue d'une opération de fraisage.

Pour effectuer une prise de référence, lors de la mise en servie d'une machine, il est nécessaire de placer un interrupteur sur chaque axe, dans une position soigneusement déterminée, et de connecter cet interrupteur au bloc de commande. Lorsque le nombre des axes est élevé, ceci représente un travail important et délicat. Les connexions à établir représentent un risque pour la fiabilité.

Les organes de mesure des positions réelles des équipages mobiles sont en général des crémaillères de haute précision, dans lesquelles engrène un pignon qui entraîne un encodeur rotatif, ou des dispositifs optiques montés sur l'équipage mobile, capables de lire des repères portés sur la règle. Ces dispositifs de repérage sont adaptables aux axes linéaires aussi bien qu'aux axes rotatifs.

Le brevet US-4 757 458 décrit un dispositif connu qui est appliqué à un axe rotatif. Un écart, variable avec le nombre de tours, entre la position angulaire donnée par un interrupteur et une référence angulaire, donne le nombre de tours effectués.

Ici aussi la présence d'un organe tel qu'un interrupteur est nécessaire. Or, on s'est aperçu qu'il était possible de remédier aux inconvénients mentionnés, d'une façon extrêmement simple, ne nécessitant aucun investissement supplémentaire dans la fabrication des machines.

La présente invention vise à réaliser l'amélioration de fiabilité évoqués ci-dessus, avec une diminution des coûts, en supprimant le ou les interrupteurs nécessaires jusqu'ici.

Dans ce but, l'objet de la présente invention est un dispositif de commande d'un axe numérique incrémentiel dans un centre d'usinage comprenant un équipage mobile associé à l'axe, capable de parcourir une course déterminée le long d'un chemin de guidage, des moyens d'entraînement pour déplacer l'équipage le long dudit chemin dans un sens et dans l'autre, des moyens de commande capables de commander les moyens d'entraînement pour réaliser des déplacements programmés de l'équipage mobile sur ledit chemin de guidage, au moins une référence placée dans une position prédéterminée le long dudit chemin, et des moyens d'activation activant la référence au cours d'un déplacement de repérage effectué par l'équipage,
dans lequel lesdits moyens de commande comportent, des moyens de détection des positions réelles de l'équipage mobile et des moyens d'émission d'un signal d'écart issu d'une comparaison entre lesdites positions réelles et des positions programmées de l'équipage mobile,
et dans lequel lesdits moyens d'activation sont constitués par:
d'une part un moyen d'action localisé, situé sur ledit chemin, à un emplacement déterminé, et capable de provoquer une déviation entre les positions réelles et programmées de l'équipage mobile lorsque ce dernier se trouve dans la zone d'action dudit moyen,
et d'autre part des moyens de traitement du signal d'écart qui, lorsque celui-ci correspond à une valeur critique déterminée initialisent le déplacement de repérage.

On va expliquer ci-après, sur la base d'une forme d'exécution prise à titre d'exemple, comment l'invention peut être mise en oeuvre.

On se référera au dessin annexé dont
la fig. 1 est une vue schématique en plan de dessus d'un équipage mobile et de ses moyens de commande, dans un centre d'usinage,
la fig. 2 est un graphique illustrant les signaux de position émis par le détecteur de l'équipage mobile, et
la fig. 3 un graphique représentant le traitement dans le dispositif de la fig. 1 des signaux de la fig. 2 et la détermination de la position de référence.

On prend comme exemple le déplacement d'un chariot 1 sur une coulisse 2 dans un centre d'usinage quelconque. Sur le chariot 1 est monté un porte-outil 3 qu'il n'est pas nécessaire de spécifier plus en détail. Le chariot 1 est actionné par un vérin 4 dont le piston 5 est relié au chariot par une tige 6 et dont le cylindre 7 est alimenté en huile sous pression à partir d'un système de vannes 8, qu'il n'est pas non plus nécessaire de décrire en détail. La commande de la vanne 8 s'effectue à partir d'un bloc de commande 9. Une partie P du bloc 9 symbolise un programme mémorisé et l'on voit que le bloc 9 est relié par une connexion 10 à un convertisseur de signaux 11.

Le convertisseur de signaux 11 est connecté, de façon connue en soi, à un capteur 12 qui se déplace avec le chariot au-dessus d'une série de repères 13, marqués sur une règle 14 associée à la coulisse 2. Les repères 13 permettent de déterminer, dans le bloc 9, la position instantanée de l'équipage mobile 1 ainsi que sa vitesse et le sens de son déplacement, comme on le verra ci-après. Outre les repères 13, la règle 14 porte encore une série de repères 15 qui constituent des références.

Comme on l'a dit précédemment, les repères 13 et 15 peuvent être de n'importe quel type connu. Ils sont conçus en fonction du type d'encodeur et de capteur utilisé.

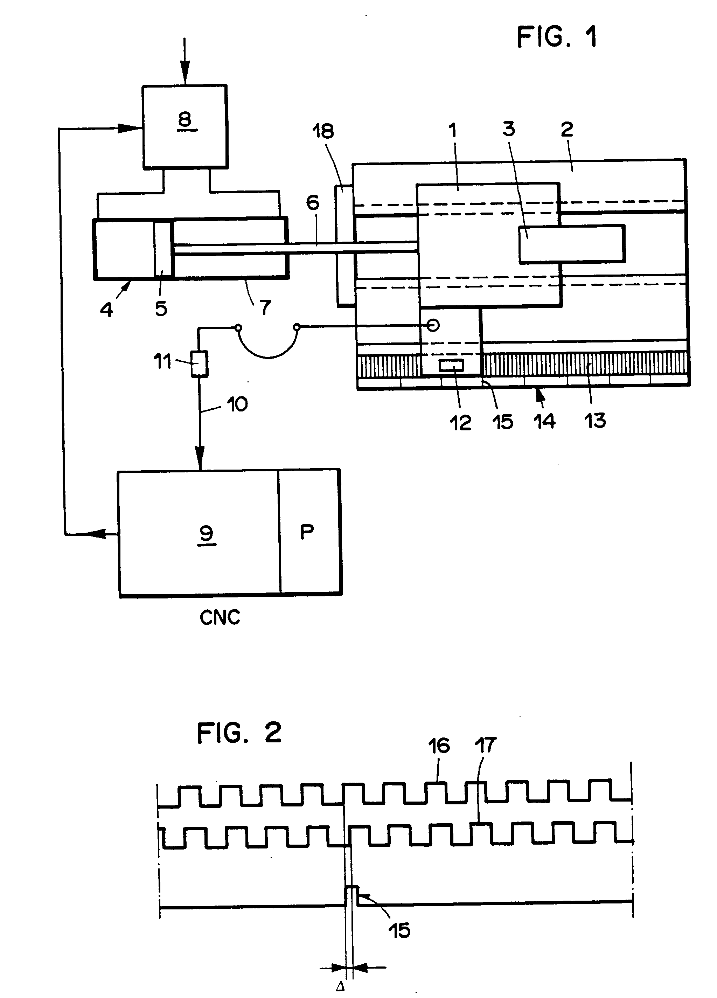

Lors de la mise en marche de l'axe représenté à la fig. 1, il s'agit d'amener le chariot 1 sur une position de référence, ou position de zéro, qui est déterminée par l'un des repères 15 choisi au préalable.

La fig. 2 montre le repère 15 qui a été choisi ou, plus exactement, le signal émis par le capteur 12 au moment où le chariot 1 se trouve en regard de ce repère. Les signaux 16 et 17 constitués de séries d'impulsions carrées, de même fréquence et de même largeur, représentent les signaux émis par l'encodeur 11 lors du déplacement du chariot 1 le long de la règle 14. Le déphasage Δ, de 90° entre les signaux correspondants de la série de signaux 16 et de la série des signaux 17 permet de déterminer le sens du déplacement, tandis que le calcul du nombre de signaux émis par l'unité de temps permet de déterminer la position relative et la vitesse.

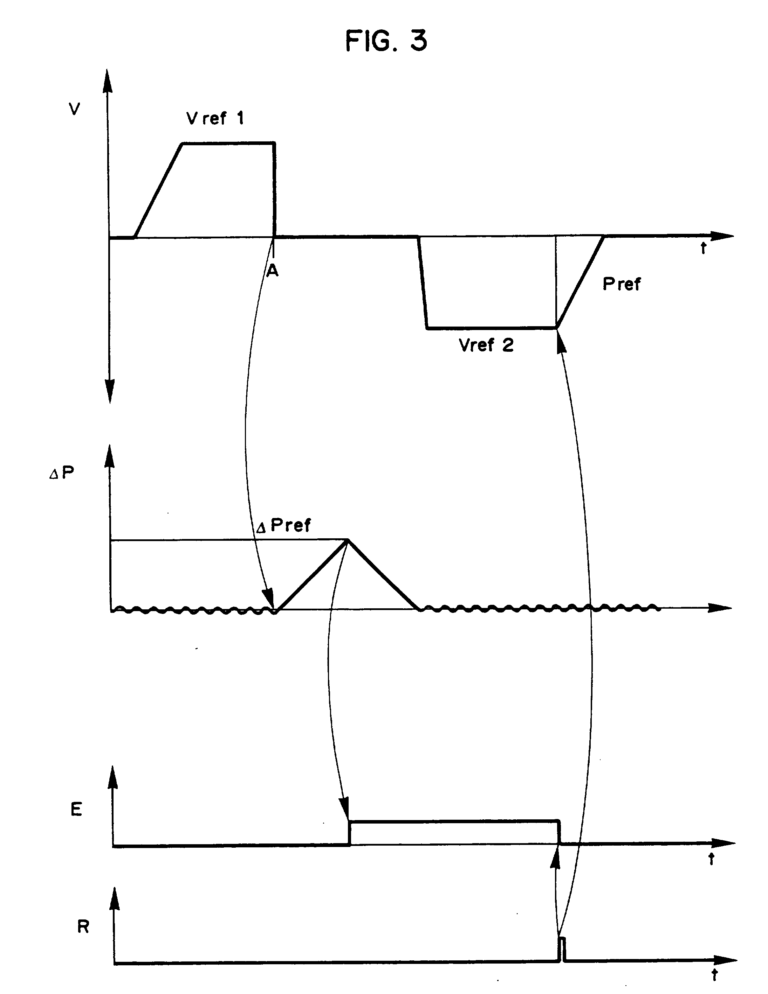

Dans le dispositif décrit, on évite entièrement l'utilisation d'un signal supplémentaire transmis au bloc 9 pour permettre de repérer celui des repères 15 qui a été sélectionné comme position zéro. Les moyens prévus pour cela découlent du graphique de la fig. 3. Ce graphique représente quatre paramètres qui varient en fonction du temps. Sur la ligne supérieure, on voit le paramètre V qui représente la vitesse de l'équipage mobile en fonction du temps. A la seconde ligne, on voit le paramètre ΔP qui représente l'écart entre la position instantanée de l'équipage mobile, donnée par les signaux de l'encodeur 11, et la position que cet équipage mobile devrait occuper théoriquement en fonction du programme contenu dans le bloc 9, à l'instant considéré. Cet écart de position prend, comme on le verra, une valeur anormale à un certain moment.

La troisième ligne représente, en fonction du temps et en synchronisme avec les deux premières lignes, un signal d'activation E de la fonction prise de référence, donc d'activation de la fonction correspondante dans le détecteur 12.

Quant à la quatrième ligne, elle représente l'émission du signal de référence R au passage du chariot sur le repère 15 qui a été activé.

Pour comprendre le fonctionnement du système ainsi programmé, on considère que, lors de l'enclenchement, le dispositif se trouve dans une position initiale qui correspond par exemple à celle de la fig. 1. Lors de la mise en service, le vérin 4 est actionné de façon que le piston se déplace de droite à gauche. Comme on le voit sur la première ligne de la fig. 3, la vitesse du chariot 1 augmente jusqu'à une première valeur limite Vref1 et le déplacement du chariot se poursuit ainsi jusqu'au moment où sa glissière entre en contact avec une butée 18 qui limite sa course. A ce moment, repéré par la lettre A sur la première ligne de la fig. 3, se produit un arrêt du déplacement et l'écart de position ΔP qui, jusqu'alors, avait une valeur très faible correspondant à la détermination de la vitesse de déplacement en fonction du programme, prend une valeur croissante, l'écart entre la position théorique et la position réelle augmentant proportionnellement au temps. Lorsque l'écart atteint la valeur ΔPref, le programme P commande, d'une part, le renversement du sens de déplacement du piston 5 dans le vérin 4 et, d'autre part, l'activation de la fonction prise de référence, comme indiqué plus haut. La courbe de vitesse du chariot a donc l'allure représentée à la première ligne de la fig. 3 et, après un certain retard, augmente rapidement pour atteindre une valeur limite Vref2. Le chariot 1 se déplace donc de gauche à droite avec la vitesse Vref2 jusqu'au moment où, le détecteur 12 étant activé, il enregistre le signal de passage sur celui des repères 15 qui a été présélectionné. On peut en effet déterminer facilement que le déplacement partant de la butée, ce sera le premier signal de référence 15 ou le second, ou le troisième, etc. qui sera enregistré comme référence zéro, de sorte que seul ce signal de référence sera fonctionnel.

Le cas échéant, la position de la règle 14 pourrait être ajustée par rapport à celle de la butée 18 de manière telle que la position du chariot correspondant à l'arrêt A (fig. 3) constitue directement la position de référence. Il est nécessaire pour cela que la position d'arrêt, déterminée par la butée, soit suffisamment précise.

Bien entendu, il n'est pas nécessaire que la butée 18 soit un organe situé au bout de la coulisse. Tout élément capable de provoquer, lors du déplacement du chariot 1, un écart de position atteignant une valeur critique prédéterminée, peut être utilisée pour réaliser la prise de référence. L'essentiel est qu'il n'est plus nécessaire de connecter électriquement un élément de détection au circuit électronique du bloc de commande, comme c'était le cas jusqu'à maintenant.

Il y a lieu de remarquer d'autre part que, dans le cas où la commande de l'axe est une commande par moteur, il pourrait se présenter des cas où la provocation de l'écart de position par le moyen d'une butée, telle que la butée 18, ne serait pas tolérable. Toutefois, dans un pareil cas, on pourrait aussi, en lieu et place d'une butée, placer sur le chemin du chariot 1, à l'endroit voulu, un élément qui, au lieu de bloquer le déplacement, provoque par exemple un freinage, donc un ralentissement de sa vitesse tel qu'un écart de position atteignant la valeur critique ΔPref puisse être provoqué.

## Revendications

1. Dispositif de commande d'un axe numérique incrémentiel dans un centre d'usinage comprenant un équipage mobile (1) associé à l'axe, capable de parcourir une course déterminée le long d'un chemin de guidage (2), des moyens d'entraînement (4) pour déplacer l'équipage le long dudit chemin dans un sens et dans l'autre, des moyens de commande (8,9,11) capables de commander les moyens d'entraînement pour réaliser des déplacements programmés de l'équipage mobile sur ledit chemin de guidage, au moins une référence (15) placée dans une position prédéterminée le long dudit chemin, et des moyens d'activation activant la référence au cours d'un déplacement de repérage effectué par l'équipage,
caractérisé en ce que lesdits moyens de commande (8,9,11) comportent des moyens de détection (11, 12, 13) des positions réelles de l'équipage mobile (1) et des moyens d'émission (9) d'un signal d'écart (ΔP) issu d'une comparaison entre lesdites positions réelles et des positions programmées de l'équipage mobile,
et en ce que lesdits moyens d'activation sont constitués par
d'une part un moyen d'action localisé (18), situé sur ledit chemin, à un emplacement déterminé, et capable de provoquer une déviation entre les positions réelles et programmées de l'équipage mobile lorsque ce dernier se trouve dans la zone d'action dudit moyen (18),
et d'autre part des moyens de traitement (9) du signal d'écart (ΔP) qui, lorsque celui-ci correspond à une valeur critique déterminée (ΔPref) initialisent le déplacement de repérage.

2. Dispositif selon la revendication 1, caractérisé en ce que le moyen d'action (18) consiste en une butée capable de bloquer le déplacement de l'équipage mobile sous l'action de ses moyens d'entraînement dans une région prédéterminée de la course.

3. Dispositif selon la revendication 1, caractérisé en ce que le moyen d'action consiste en un moyen de freinage capable de freiner le déplacement de l'équipage mobile sous l'action de ses moyens d'entraînement, dans une région prédéterminée de la course.

4. Dispositif selon la revendication 1, comportant une série de références (15) associées à un organe de mesure fixe (14), disposé le long du dit chemin (2), caractérisé en ce que les moyens de traitement sont constitués de manière qu'une référence présélectionnée dans ladite série soit activée lorsque le déplacement de repérage est initialisé.

5. Dispositif selon la revendication 4, caractérisé en ce que le moyen d'action (18) consiste en une butée capable de bloquer le déplacement de l'équipage mobile sous l'action de ses moyens d'entraînement, dans une région prédéterminée du dit chemin, et en ce que les moyens de traitement sont constitués de manière que la butée représente physiquement la position de référence.

6. Dispositif selon la revendication 1, caractérisé en ce que les moyens d'entraînement sont des moyens hydrauliques et l'équipage mobile porte un outil de coupe.

7. Dispositif selon la revendication 1, caractérisé en ce que les moyens d'entraînement comportent un moteur électrique et l'équipage mobile porte un outil de coupe.

## Patentansprüche

1. Vorrichtung zur Steuerung einer numerisch inkrementalen Achse in einem Bearbeitungszentrum, mit einem beweglichen Organ (1), das mit der Achse verbunden ist und zum Zurücklegen einer bestimmten Bahn längs einem Führungsweg (2) vorgesehen ist, mit Antriebsmitteln (4), um das Organ längs dem Weg in der einen und anderen Richtung zu verschieben, mit Steuermitteln (8, 9, 11), die zum Steuern der Antriebsmittel vorgesehen sind, um programmierte Verschiebungen des beweglichen Organes auf dem Führungsweg zu verwirklichen, mit mindestens einer Referenz (15), die an einer vorbestimmten Stelle längs des Weges angeordnet ist und mit Aktivierungsmitteln, die die Referenz im Verlaufe einer Zielverschiebung, die durch das Organ ausgeführt wird, aktivieren,
dadurch gekennzeichnet, dass die Steuermittel (8, 9, 11) Mittel (11, 12, 13) zum Detektieren von tatsächlichen Stellungen des beweglichen Organes (1) umfassen und Mittel (9) zum Senden eines Abweichungssignales (ΔP) aufweisen, das aus einem Vergleich zwischen den tatsächlichen Stellungen und den programmierten Stellungen des mobilen Organes stammt,
und dass die Aktivierungsmittel zum einen Teil aus einem lokalen Betätigungsmittel (18) bestehen, welches auf dem Weg an einem bestimmten Ort angeordnet ist und dazu vorgesehen ist, eine Abweichung zwischen den wirklichen und programmierten Stellungen des mobilen Organes zu erzeugen, wenn sich das letztere in der Aktionszone des Mittels (18) befindet,
und zum anderen Teil Mittel zum Verarbeiten (9) des Abweichungssignales (ΔP) aufweisen, welche, sobald das letztere einem vorbestimmten kritischen Wert (Δ Pref) entspricht, eine Zielverschiebung einleiten.

2. Vorrichtung nach Anspruch 1, dadurch gekennzeichnet, dass das Betätigungsmittel (18) einen Anschlag umfasst, welcher zum Blockieren der Verschiebung des beweglichen Organes unter der Wirkung seiner Antriebsmittel in einem vorbestimmten Bereich der Bahn vorgesehen ist.

3. Vorrichtung nach Anspruch 1, dadurch gekennzeichnet, dass die Betätigungsmittel ein Bremsmittel umfassen, das zum Bremsen in einem vorbestimmten Bereich auf der Bahn der unter der Wirkung des Antriebsmittels hervorgerufenen Verschiebebewegung des mobilen Organes vorgesehen ist.

4. Vorrichtung nach Anspruch 1 mit einer Folge von Referenzen (15), die einem festen Messorgan (14), welches längs des Weges (2) angeordnet ist, zugeordnet sind, dadurch gekennzeichnet, dass die Verarbeitungsmittel derart aufgebaut sind, dass eine aus der Serie vorausgewählte Referenz aktiviert wird, sobald die Zielverschiebung ausgelöst ist.

5. Vorrichtung nach Anspruch 4, dadurch gekennzeichnet, dass die Betätigungsmittel (18) aus einem Anschlag bestehen, der dazu vorgesehen ist, die unter der Wirkung der Antriebsmittel hervorgerufene Verschiebebewegung des mobilen Organes in einem vorbestimmten Bereich dessen Weges zu blockieren und dass die Verarbeitungsmittel derart gebildet sind, dass der Anschlag physisch die Referenzposition darstellt.

6. Vorrichtung nach Anspruch 1, dadurch gekennzeichnet, dass die Antriebsmittel hydraulische Mittel sind und dass das mobile Organ ein Schnittwerkzeug trägt.

7. Vorrichtung nach Anspruch 1, dadurch gekennzeichnet, dass die Antriebsmittel einen Elektromotor umfassen und dass das mobile Organ ein Schnittwerkzeug trägt.

## Claims

1. A device for controlling an incremental numerical axis in a machining station, having a mobile assembly (1) associated with the axis, capable of travelling a predetermined course along a guide path (2), drive means (4) for moving the assembly along the said path in one direction and in the other, command means (8, 9, 11) capable of commanding the drive means to carry out programmed movements of the mobile assembly on the said guide path, at least one reference (15) placed in a predetermined position along the said path and activation means activating the reference during a locating movement effected by the assembly,
characterized in that the said control means (8, 9, 11) comprising detection means (11, 12, 13) of the actual positions of the mobile assembly (1) and means (9) to transmit a signal representing a deviation (ΔP) derived from a comparison between the said actual positions and the programmed positions of the mobile assembly,
and in that the said activation means comprise
on the one hand a localized means of action (18) situated on the said path, at a pre-determined place, and capable of causing a deviation between the actual and programmed positions of the mobile assembly when the latter is situated in the zone of action of the said means (18),
and, on the other hand, means of processing (9) the signal representing a deviation (ΔP) which, when said signal corresponds to a predetermined critical value (ΔPref) initiate the locating movement.

2. Device according to claim 1, characterized in that the action means (18) comprise a stop capable of blocking the movement of the mobile assembly under the influence of its drive means, in a pre-determined region of the course.

3. Device according to claim 1, characterized in that the action means comprise a braking means capable of braking the movement of the mobile assembly under the influence of its drive means, in a predetermined region of the course.

4. Device according to claim 1, comprising a series of references (15) associated with a fixed measuring instrument (14) disposed along the said path (2), characterized in that the treatment means are made up in such a way that a reference preselected in said series is activated when the locating movement is initialized.

5. Device according to claim 4, characterized in that the action means (18) comprise a stop capable of blocking the movement of the mobile assembly under the influence of its drive means, in a pre-determined region of the said path, and in that the treatment means are made up in such a way that the stop physically represents the reference position.

6. Device according to claim 1, characterized in that the drive means are hydraulic means, and the mobile assembly bears a cutting tool.

7. Device according to claim 1, characterized in that the drive means comprise an electric motor, and the mobile assembly bears a cutting tool.
